# EUROPÄISCHE PATENTANMELDUNG

(11) **EP 1 709 940 A1**
(43) Veröffentlichungstag der Anmeldung: **11.10.2006**
(21) Anmeldenummer: 06007105.7
(22) Anmeldetag: 04.04.2006
(51) Int. Cl.: A61C 13/275

(54) **Vorrichtung zur Befestigung von lösbarem Zahnersatz**

(30) Priorität: 07.04.2005 DE 102005016219
(71) Anmelder: Bredent Dentalgeräte und Materialien Fach- und Organisationsberatung Peter Brehm, 89250 Senden (DE)
(72) Erfinder: Laux, Robert, Dr., 73642 Welzheim (DE)
(74) Vertreter: Dziewior, Joachim

(57) **Zusammenfassung**

Die Vorrichtung dient zur Befestigung von lösbarem Zahnersatz, insbesondere von einer Prothese, an wenigstens zwei im Kiefer (2) des Patienten verankerten Implantaten (1). Dazu sind jeweils auf die Implantate (1) aufsetzbare und an diesen zu befestigende Aufbaupfosten (3) vorgesehen, an denen wenigstens ein von einem Teleskopstift (5) oder einer zur Aufnahme eines Teleskopstifts (5) eingerichteten Teleskophülse (6) gebildetes Teleskopteil (4) über ein Gelenk angeschlossen ist. Das Teleskopteil (4) des einen Aufbaupfostens (3) bildet mit dem Teleskopteil (4) des benachbarten Aufbaupfostens (3) korrespondierend eine Teleskopverbindung und somit einen Anschlußsteg (7) für den zu verankernden Zahnersatz.

## Beschreibung

Die Erfindung betrifft eine Vorrichtung zur Befestigung von lösbarem Zahnersatz, insbesondere von einer Prothese, an wenigstens zwei im Kiefer des Patienten verankerten Implantaten.

Prothesen herkömmlicher Art, insbesondere Vollprothesen sind so geschaffen, dass sie - gegebenenfalls unter zusätzlicher Anwendung von Haftmitteln - am Kiefer des Patienten Halt finden. Voraussetzung hierfür ist jedoch eine möglichst optimale Passgenauigkeit, die jedenfalls dann nicht bzw. nicht mehr im ausreichenden Masse gegeben ist, wenn Formveränderungen des Kiefers auftreten.

Desweiteren ist bekannt, Zahnersatz in unterschiedlicher Gestaltung an Implantaten und gegebenenfalls zusätzlich an noch vorhandenem Restzahnbestand eines Patienten zu verankern.

Der Erfindung liegt die Aufgabe zugrunde, lösbaren Zahnersatz unter Zuhilfenahme von Implantaten am Kiefer zusätzlich zu fixieren. Dies soll im übrigen auf möglichst einfache und kostengünstige Weise mit einem Minimum an Materialaufwand durchführbar sein.

Eine diese Aufgabe lösende Vorrichtung ist gekennzeichnet durch jeweils auf die Implantate aufsetzbare und an diesen zu befestigende Aufbaupfosten, an denen wenigstens ein von einem Teleskopstift oder einer zur Aufnahme eines Teleskopstifts eingerichteten Teleskophülse gebildetes Teleskopteil über ein Gelenk angeschlossen ist, wobei das Teleskopteil des einen Aufbaupfostens mit dem Teleskopteil des benachbarten Aufbaupfostens korrespondierend eine Teleskopverbindung und somit einen Anschlußsteg für den zu verankernden Zahnersatz bildet.

Der durch die Erfindung erreichte Vorteil besteht im wesentlichen darin, dass zur Befestigung der Prothese bzw. des Zahnersatzes einfach anzubringende Teleskopverbindungen dienen, die universell einsetzbar sind, also keine genaue vorgeschriebene Platzierung der Implantate erforderlich machen. Die Teleskopverbindung schafft dabei einen selbsttätigen Ausgleich hinsichtlich des Abstandes zwischen zwei Implantaten, während die gelenkige Verbindung einen Ausgleich hinsichtlich der räumlichen Anordnung der Implantate untereinander schafft. Da somit keine starren Verbindungen zwischen den einzelnen Implantaten geschaffen werden, ist darüber hinaus sichergestellt, dass selbst bei leichten Kieferverformungen insoweit keine Kräfte auf die Implantate wirken, sondern Abstandsänderungen über die Teleskopverbindung und Änderungen in der Winkellage über die Gelenkverbindung ausgeglichen werden. Um die Lagerhaltung an benötigten Teilen möglichst gering zu halten, können der Teleskopstift sowie die Teleskophülse in einer maximal zu erwartenden Länge vorgefertigt sein, die dann beim Einbau einfach auf die tatsächlich benötigte Länge gekürzt werden.

Um eine möglichst universelle Gelenkigkeit der Teleskopteile am Aufbaupfosten zu erreichen, ist in bevorzugter Ausgestaltung vorgesehen, dass das Gelenk als Kugelgelenk ausgebildet ist.

Weiter empfiehlt es sich im Rahmen der Erfindung, dass bei einem zwischen zwei weiteren Aufbaupfosten anzuordnenden, einen Mittelpfosten bildenden Aufbaupfosten zwei Teleskopteile vorgesehen sind, wobei das eine als Teleskopstift und das andere als Teleskophülse ausgebildet ist. Auf diese Weise können - insbesondere zur Befestigung einer Vollprothese - mehrere untereinander gleich ausgebildete Mittelpfosten problemlos aneinandergereiht werden.

Entsprechend empfiehlt es sich, dass der nur ein Teleskopteil tragende, einen Endpfosten bildende Aufbaupfosten wahlweise einen Teleskopstift oder eine Teleskophülse trägt. Im praktischen Anwendungsfall wird daher endseitig jeweils ein mit einem Teleskopstift und ein mit einer Teleskophülse versehener Endpfosten zur Anwendung kommen.

Weiter hat es sich als vorteilhaft erwiesen, wenn die Kugelpfanne des Kugelgelenks im Aufbaupfosten und der Kugelkopf endseitig am Teleskopteil vorgesehen sind.

Im Hinblick auf den bogenförmigen Verlauf des Kiefers wird im Rahmen der Erfindung vorgeschlagen, dass der Winkel zwischen zwei Kugelpfannen, bezogen auf die Längsachse des Aufbaupfostens bzw. des Implantats, zwischen 120° und 180° beträgt.

Um hier jedoch auch eine weitergehende Variationsmöglichkeit zu haben, können gemäß einer vorteilhaften Weiterbildung der Erfindung die Kugelpfannen auch auf um die Längsachse des Aufbaupfostens verdreh- und feststellbaren Ringen angeordnet sein. Damit lassen sich grundsätzlich beliebige Winkelausrichtungen der Kugelpfannen einstellen.

Zusätzlich kann der Aufbaupfosten so ausgebildet sein, dass er in beliebiger oder auch in durch vorgegebene Winkellagen festgelegter Drehstellung auf dem Implantat befestigbar ist, wobei letzteres durch eine entsprechende Außenkontur beispielsweise in der Art einer Verzahnung erreichbar ist, die in eine entsprechende Gegenkontur des Implantats greift.

Im übrigen kann der Aufbaupfosten in besonders einfacher Weise über eine Zentralschraube am Implantat befestigt sein.

Schließlich kann im Rahmen der Erfindung noch vorgesehen sein, dass der Aufbaupfosten mit zusätzlichen Anschlußelementen auch in Form eines Kugelanschlusses versehen ist.

Im folgenden wird die Erfindung an in der Zeichnung dargestellten Ausführungbeispielen näher erläutert; es zeigen:
- Fig. 1: vier an einem Kiefermodell eingesetzte Implantate mit darauf angeordneten Aufbaupfosten sowie die Aufbaupfosten verbindenden Teleskopteilen,
- Fig. 2: einen Aufbaupfosten mit nur einem Teleskopteil als Endpfosten,
- Fig. 3: einen Aufbaupfosten mit zwei Teleskopteilen als Mittelpfosten,
- Fig. 4: eine gestreckte Anordnung von vier Aufbaupfosten,
- Fig. 5: eine der Figur 4 entsprechende Darstellung, jedoch im in die Implantate eingeschraubtem Zustand.

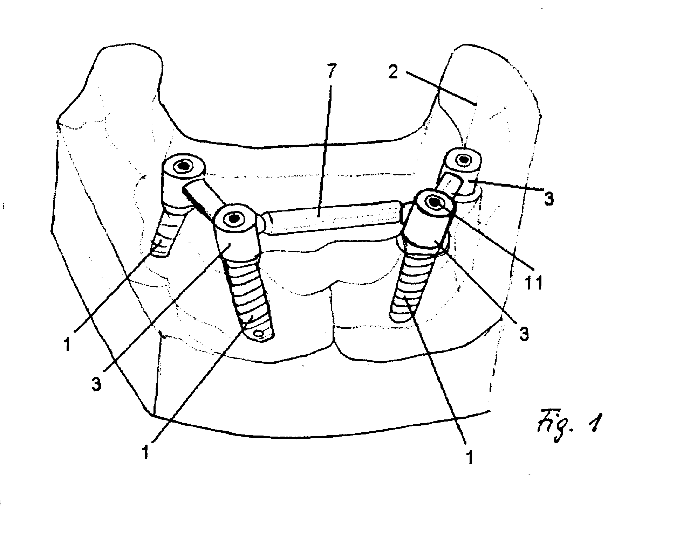

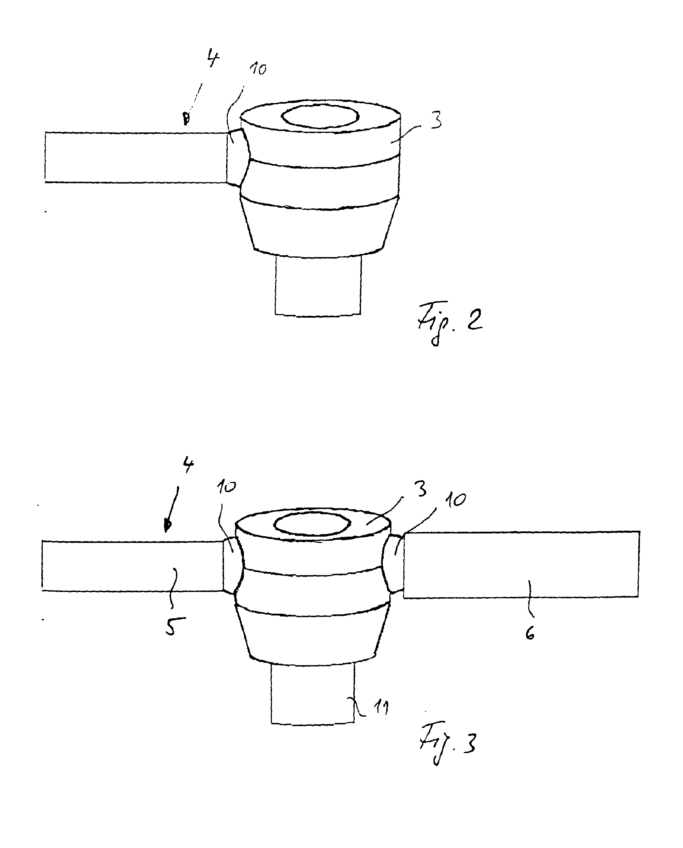

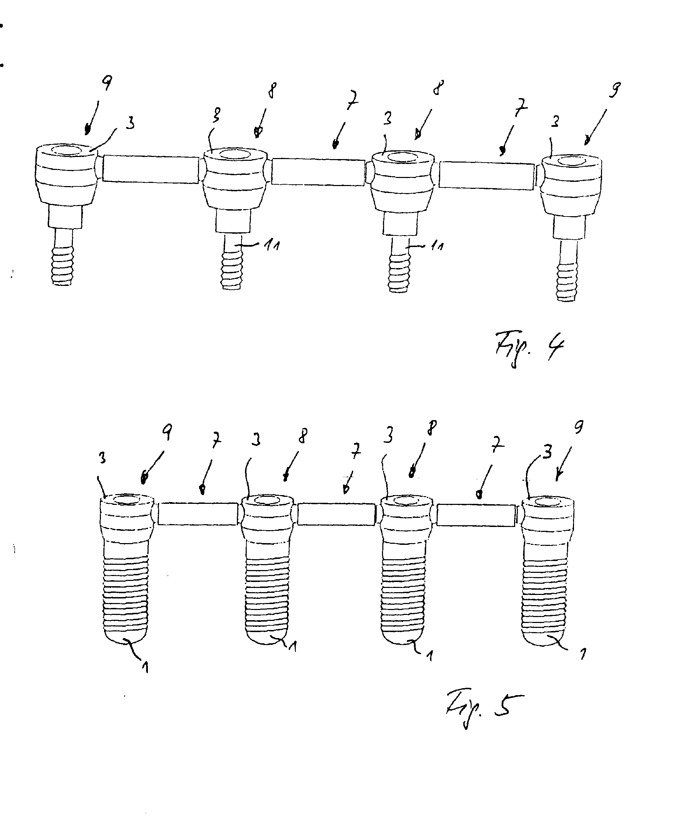

Die in der Zeichnung dargestellte Vorrichtung dient zur Befestigung von in der Zeichnung nicht wiedergegebenem lösbarem Zahnersatz, der insbesondere aus einer Teil- oder auch Vollprothese bestehen kann. Hierfür sind im Ausführungsbeispiel nach der Figur 1 vier Implantate 1 im Kiefer 2 des Patienten verankert, deren Positionierung zweckmäßigerweise in der dargestellten Anordnung erfolgen sollte, wobei die genaue Lage der einzelnen Implantate 1 jedoch variieren kann. Dies ist insbesondere deshalb zweckmäßig, um hinsichtlich der vorhandenen Knochensubstanz eine optimale Positionierung der Implantate 1 vornehmen zu können. Dabei kommt es insbesondere auch nicht darauf an, dass die einzelnen Implantate 1 achsparallel zueinander ausgerichtet sind.

Im einzelnen besteht die Vorrichtung aus Aufbaupfosten 3, die jeweils auf die Implantate 1 aufsetzbar sind und auf diesen befestigt werden können. An den Aufbaupfosten 3 sind Teleskopteile 4 gelenkig angeschlossen, wobei ein Teleskopteil 4 entweder aus einem Teleskopstift 5 oder aus einer Teleskophülse 6 gebildet sein kann, die im übrigen so beschaffen sind, dass der Teleskopstift 5 formschlüssig von der Teleskophülse 6 aufgenommen wird. Nach entsprechender Montage bildet dann das Teleskopteil 4 des einen Aufbaupfostens 3 zusammen mit dem Teleskopteil 4 des benachbarten Aufbaupfostens 3 eine Teleskopverbindung und somit einen Anschlußsteg 7, der zur Verankerung des Zahnersatzes verwendet werden kann. Das Gelenk ist dabei, wie sich aus den Zeichnungen ergibt, als Kugelgelenk ausgebildet, um unabhängig von der Ausrichtung und gegenseitigen Stellung der Implantate 1 stets eine Teleskopverbindung schaffen zu können.

Die einen Mittelpfosten 8 bildenden Aufbaupfosten 3 tragen dabei jeweils zwei Teleskopteile 4, von denen das eine als Teleskopstift 5 und das andere als Teleskophülse 6 ausgebildet ist. Der einen Endpfosten 9 bildende Aufbaupfosten 3 trägt dagegen nur ein Teleskopteil 4, das wahlweise als Teleskopstift 5 oder als Teleskophülse 6 ausgebildet sein kann.

Die Kugelpfanne des Kugelgelenks ist dabei im Aufbaupfosten 3 angeordnet, während der Kugelkopf 10 endseitig am Teleskopteil 4 vorgesehen ist.

Im Hinblick auf die bogenförmige Gestalt des Kiefers 2 beträgt der Winkel zwischen zwei Kugelpfannen der Mittelpfosten 8 - bezogen auf die Längsachse des Aufbaupfostens 3 bzw. des Implantats 1 - in der Regel zwischen 120° und 180°.

Es besteht jedoch auch die in der Zeichnung nicht näher dargestellte Möglichkeit, dass die Kugelpfannen auf Ringen des Aufbaupfostens 3 angeordnet sind, die verdreh- und feststellbar sind, wodurch sich beliebige Winkeleinstellungen wählen lassen.

Der Aufbaupfosten 3 ist bei der in der Zeichnung dargestellen Ausführungsform in beliebiger Winkellage auf dem Implantat 1 befestigbar. Grundsätzlich besteht jedoch auch die Möglichkeit, durch ineinandergreifende, unrunde Strukturen nur bestimmte Drehstellungen zuzulassen, was im übrigen die Drehfestigkeit zwischen Implantat 1 und Aufbaupfosten 3 sicherstellt.

Der Aufbaupfosten 3 selbst ist über eine Zentralschraube 11 am Implantat 1 befestigt.

Schließlich besteht noch die ebenfalls in der Zeichnung nicht dargestellte Möglichkeit, den Aufbaupfosten 3 mit zusätzlichen Anschlußelementen zu versehen, die weitere Befestigungsaufgaben übernehmen können. Diese Anschlußelemente können dabei auch die Form eines Kugelanschlusses besitzen.

Grundsätzlich besteht aber auch die Möglichkeit, im Rahmen der Erfindung auch einteilige Implantate einzusetzen, bei denen also das Implantat und der Aufbaupfosten einstückig ausgebildet sind. In diesem Fall können die Anschlußstege 7 einfach mit dem Implantat verklebt, an diese anzementiert oder in vergleichbarer Weise verbunden sein.

## Patentansprüche

1. Vorrichtung zur Befestigung von lösbarem Zahnersatz, insbesondere von einer Prothese, an wenigstens zwei im Kiefer (2) des Patienten verankerten Implantaten (1), **gekennzeichnet durch** jeweils auf die Implantate (1) aufsetzbare und an diesen zu befestigende Aufbaupfosten (3), an denen wenigstens ein von einem Teleskopstift (5) oder einer zur Aufnahme eines Teleskopstifts (5) eingerichteten Teleskophülse (6) gebildetes Teleskopteil (4) über ein Gelenk angeschlossen ist, wobei das Teleskopteil (4) des einen Aufbaupfostens (3) mit dem Teleskopteil (4) des benachbarten Aufbaupfostens (3) korrespondierend eine Teleskopverbindung und somit einen Anschlußsteg (7) für den zu verankernden Zahnersatz bildet.

2. Vorrichtung nach Anspruch 1, **dadurch gekennzeichnet, daß** das Gelenk als Kugelgelenk ausgebildet ist.

3. Vorrichtung nach Anspruch 1 oder 2, **dadurch gekennzeichnet, daß** bei einem zwischen zwei weiteren Aufbaupfosten (3) anzuordnenden, einen Mittelpfosten (8) bildenden Aufbaupfosten (3) zwei Teleskopteile (4) vorgesehen sind, wobei das eine als Teleskopstift (5) und das andere als Teleskophülse (6) ausgebildet ist.

4. Vorrichtung nach Anspruch 1 oder 2, **dadurch gekennzeichnet, daß** der nur ein Teleskopteil (4) tragende, einen Endpfosten (9) bildende Aufbaupfosten (3) wahlweise einen Teleskopstift (5) oder eine Teleskophülse (6) trägt.

5. Vorrichtung nach einem der Ansprüche 1 bis 4, **dadurch gekennzeichnet, daß** die Kugelpfanne des Kugelgelenks im Aufbaupfosten (3) und der Kugelkopf (10) endseitig am Teleskopteil (4) vorgesehen sind.

6. Vorrichtung nach Anspruch 5, **dadurch gekennzeichnet, daß** der Winkel zwischen zwei Kugelpfannen, bezogen auf die Längsachse des Aufbaupfostens (3) bzw. des Implantats (1), zwischen 120° und 180° beträgt.

7. Vorrichtung nach Anspruch 5, **dadurch gekennzeichnet, daß** die Kugelpfannen auf um die Längsachse des Aufbaupfostens (3) verdreh- und feststellbaren Ringen angeordnet sind.

8. Vorrichtung nach einem der Ansprüche 1 bis 7, **dadurch gekennzeichnet, daß** der Aufbaupfosten (3) in beliebiger oder in durch vorgegebene Winkellagen festgelegter Drehstellung auf dem Implantat (1) befestigbar ist.

9. Vorrichtung nach einem der Ansprüche 1 bis 8, **dadurch gekennzeichnet, daß** der Aufbaupfosten (3) über eine Zentralschraube (11) am Implantat (1) befestigt ist.

10. Vorrichtung nach einem der Ansprüche 1 bis 9, **dadurch gekennzeichnet, daß** der Aufbaupfosten (3) mit zusätzlichen Anschlußelementen auch in Form eines Kugelanschlusses versehen ist.
